# EUROPEAN PATENT SPECIFICATION

(11) **EP 3 262 307 B1**
(45) Date of publication and mention of the grant of the patent: **18.03.2020**
(21) Application number: 15707902.1
(22) Date of filing: 25.02.2015
(51) Int. Cl.: F16B 7/14

(54) **TELESCOPIC POLE ASSEMBLY FOR WORKING TOOL**
TELESKOPSTANGENANORDNUNG FÜR EIN ARBEITSWERKZEUG
ENSEMBLE MANCHE TÉLESCOPIQUE POUR OUTIL DE TRAVAIL

(43) Date of publication of application: 03.01.2018
(73) Proprietor: Husqvarna AB, 561 82 Huskvarna (SE)
(72) Inventor: ZELLER, Tobias, 89233 Neu-Ulm (DE); RIEF, Joachim, 89584 Ehingen (DE)
(86) International application number: PCT/EP2015/053943
(87) International publication number: WO 2016/134762

(56) References cited:
- DE-U1-202012 104 609
- US-A- 3 667 788
- US-A- 4 329 076
- US-A- 4 508 467
- US-B1- 8 469 423

## Description

### TECHNICAL FIELD

The present invention relates to a working tool assembly, and more particularly to a telescopic pole assembly of the working tool assembly for enable cutting and pruning of branches located at various heights from ground.

### BACKGROUND

Working tools like hedge trimmer, chainsaw, pruner, lopper, gripper, manipulator, etc. are used to perform various functions. The working tool with telescopic pole assembly are used for performing various functions located at various heights from a ground are well known in the art. Based on the cutting or trimming application and requirement the working tool may be chainsaw, lopper, trimmer, etc. In an exemplary embodiment, the telescopic pole assembly may include a set of sliding tubes that are detachably connected via a coupler, a nut and bolt mechanism, or a locking clamp. Thus, in a locked configuration, the coupler locks the sliding tubes relative to each other. Further, in an unlocked configuration, the coupler may allow tubes to telescopically slide relative to each other to adjust the height of the working tool as per the user requirement which may be based on the location of the branches or hedges with respect to the ground.

During unlocking operation of the telescopic pole assembly, the sliding tubes will have a relative motion between them to adjust the height of the telescopic pole assembly according to the location of the hedges, branches or twigs. As the unlocking operation is initiated the sliding tube's relative motion speed is dependent on the orientation of the sliding tubes with respect to the ground surface. When the orientation of the sliding tubes is substantially parallel to the ground and the user initiates the unlocking operation, the sliding tubes will have no relative motion speed or less relative motion speed. In this case, the user can change the positioning of the sliding tubes with respect to each other to change the height of the telescopic pole assembly as the sliding tubes are unlocked. However, when the orientation of the sliding tubes is substantially perpendicular to the ground, the sliding tubes will have a maximum relative motion speed due to gravity. The perpendicular orientation of the sliding tubes can be dangerous as a working tool like a chainsaw, trimmer, pruner, etc. with cutting element is positioned above the user. The working tool may get in contact with the user and may cause harm to the user if the relative motion speed of the sliding tubes is not controlled. Therefore, a braking function is introduced in the telescopic pole assembly while extraction and insertion of the sliding tubes. The braking function is provided by friction resistance between the sliding tubes or by a friction resistance material included in between the sliding tubes. This braking function may cause the brake resistance to be lowered due to abrasion caused on the sliding tubes. The lowered brake resistance will cause an uncontrolled relative motion which may be dangerous as it will cause injury to the user.

European Patent application EP0445086A1 published on 04 September, 1991 to Venturi, discloses friction elements for blocking extractable truncated-cone sections of telescopic fishing rods. The friction elements are frusto-conical shape and while extraction of the telescopic fishing rods provides friction due to the shape of the friction elements. A braking function will be applied due to the friction elements while telescoping. There will be a high abrasion between the friction elements and the telescoping rods. Also, due to the dimension of the frusto-conical shape of the friction elements a non-uniform braking force will be applied while telescoping. The user will not be able to control the braking force for extraction of the telescopic rods due to non-uniform braking force.

DE 20 2012 104 609 U1 discloses a telescopic pole assembly according to the preamble of claim 1.

Therefore, in light of the foregoing, there is a need for an improved braking function in a telescopic pole assembly for the attachment to a working tool.

### SUMMARY

In view of the above, it is an objective of the present invention to solve or at least reduce the problems discussed above. The objective is at least partially achieved according to a telescopic pole assembly, in an embodiment of the present invention. A telescopic pole assembly includes an inner tube, an outer tube, and a locking assembly configured to lock and unlock the inner tube with respect to the outer tube. Further, a guiding element is connected to either one of the inner tube or the outer tube, the guiding element faciliting guiding over the length of the inner tube with no rotational motion between the inner tube and the outer tube which comprises at least one bushing part and at least one braking part. Moreover, the at least one braking part having a movable braking element is configured to provide the braking force between the inner tube and the outer tube when the inner tube is unlocked with respect to the outer tube.

The guiding element performs a dual function of guiding the sliding movement between the inner and outer tubes as well as the braking force between the inner and outer tubes. The braking force between the inner and outer tubes acts as a safety function since the working tool may be a cutting tool like a hedge trimmer, a pole saw, or the like. The braking force will provide a low sliding motion between the inner and outer tubes. The braking surface will provide the braking force and due to the cantilever design the frictional contact with the inner surface of the outer tube will always be constant over the lifetime of the telescopic pole assembly. The cantilever design of the braking element enables a movement and is flexible resulting in mower abrasion. The constant braking force applied between the inner and outer tubes will enable the user to control the insertion and extraction speed based on the design of the braking element.

According to an embodiment, the guiding element is connected to the inner tube. Further, the at least one bushing part comprises a plurality of ribs and slots to facilitate guiding. Either one of the inner tube or the outer tube comprising complementary ribs is configured to facilitate guiding with the guiding element. In an embodiment, the at least one bushing part and the at least one braking part are integrally formed on the guiding element. Moreover, the guiding element is positioned at an end of either one of the inner tube or the outer tube.

According to an embodiment, the guiding element is connected to either one of the inner tube or the outer tube by fasteners or welding. According to another embodiment, the guiding element is integral to either one of the inner tube or the outer tube.

According to an embodiment, the at least one braking part is a spring arrangement. The spring arrangement includes at least one helical spring.

According to an embodiment, the inner tube and the outer tube are made up of aluminium or steel. According to another embodiment, the inner tube and the outer tube are made up of plastic.

According to an embodiment, the locking assembly includes an adjustment nut.

According to an embodiment, the working tool is a cutting tool or a cleaning tool. According to another embodiment, the working tool is a hedge trimmer.

### BRIEF DESCRIPTION OF THE DRAWINGS

The invention will be described in more detail with reference to the enclosed drawings, wherein:
FIG. **1** illustrates a perspective view a working tool assembly, according to an embodiment of the present invention;
FIG. **2** illustrates an exploded view of a telescopic pole assembly of the working tool assembly of FIG. **1****,** in accordance to an embodiment of the present invention;
FIG. **3** illustrates a guiding element of the telescopic pole assembly of FIG. **2****,** in accordance to an embodiment of the present invention;
FIGS. **4A** and **4B** illustrate sectional views of the telescopic pole assembly and the guiding element respectively, in accordance to an embodiment of the present invention; and
FIG. **5** illustrates a guiding element of the telescopic pole assembly, in accordance to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

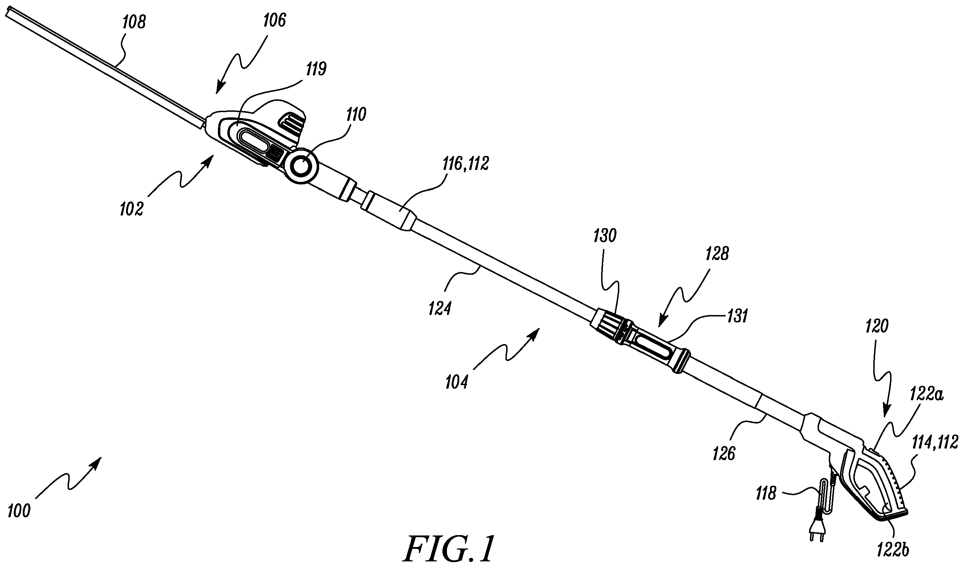

FIG. **1** illustrates a perspective view of a working tool assembly **100,** according to an embodiment of the present invention. The working tool assembly **100,** as illustrated in FIG. **1****,** is a motor-operated telescopic hedge trimmer for trimming of hedges, branches or twigs of trees at a height from the ground. In another embodiment, the working tool assembly **100** may be a telescopic pole saw, branch pruner, loppers, or a gripper, a manipulator, a cleaning tool.

The working tool assembly **100** includes a working tool **102** and a telescopic pole assembly **104.** As illustrated, the working tool **102** may include a hedge trimmer cutting head **106** having a blade arrangement **108** with at least one movable component. The working tool **102** may be attached to the telescopic pole assembly **104** via a pivot joint **110.** The pivot joint **110** may allow tilting or angular orientation of the working tool **102** relative to the telescopic pole assembly **104** and permit convenient trimming of the hedges while standing safely on the ground. In the illustrated embodiment, the working tool **102** is oriented at about 180 degrees relative to the telescopic pole assembly **104.** In various embodiments, the working tool **102** may be oriented at various other angles, between about 90 to 180 degrees, relative to the telescopic pole assembly **104.** The various angular orientations between the working tool **102** and the telescopic pole assembly **104** may enable trimming of hedges located at various angular positions.

The working tool assembly **100** also includes a handle assembly **112.** The handle assembly **112** may include a rear grip portion **114** and a front handle portion **116.** The rear grip portion **114** is adjoining and coaxially mounted to the telescopic pole assembly **104.** The front handle portion **116** is formed substantially as an annular sleeve shaped bracket which is preferably disposed towards the working tool **102** on the telescopic pole assembly **104.** In various alternative embodiments (not shown), the front handle portion **116** may be a D-shaped handle or a T-shaped handle, which is coupled to the telescopic pole assembly **104,** and can be used for handling the working tool **102.** The handle assembly **112** is formed in several parts in such a way that the front handle portion **116** is adjustable relative to the rear grip portion **114.** This allows the handle assembly **112** to be adapted for an operator and to other appropriate setting of the telescopic pole assembly **104** and the working tool **102.** In an embodiment, the handle assembly **112** may be preferably injection molded parts made from plastic. In an alternate embodiment, the front handle portion **116** and the rear grip portion **114** may be integral to the telescopic pole assembly **104.** In an embodiment, the telescopic pole assembly **104,** the front handle portion **116** and the rear grip portion **114** may be injection moulded by either steel, aluminium or plastic. In another embodiment, the telescopic pole assembly **104,** the front handle portion **116** and the rear grip portion **114** may be formed by two-shot injection moulding with a combination of plastic and steel.

Further, a cable **118** is provided for power supply to a drive motor (not shown) of the working tool **102,** the cable **118** may be guided through the telescopic pole assembly **104** and connected to the drive motor. The drive motor, for example, may be an electric motor, via a transmission gear, connected with the blade arrangement **108.** Alternatively, a battery is provided and housed within a battery compartment **119** which is preferably disposed at the rear of the working tool **102.** The battery can be easily replaceable, and the drive motor may be connected directly to the battery in such an arrangement and the cable **118** is connected to the battery. Furthermore, to operate the working tool **102,** a control switch **120** is provided at the rear grip portion **114** in the interior thereof. The control switch **120** may be switching buttons **122a, 122b** which can be pressed while grasping the rear grip portion **114** and act on corresponding micro-switches to power the drive motor.

According to an embodiment of the present invention, the telescopic pole assembly **104** includes an inner tube **124,** an outer tube **126** and a locking assembly **128** that is configured to detachably connect and also lock the inner tube **124** to the outer tube **126.** The telescopic pole assembly **104** may enable trimming of hedges located at various heights from the ground. The inner and outer tubes **124, 126** are shown to be having substantially cylindrical cross-section. However, the inner and outer tubes **124, 126** may be of any other cross-section, for example, elliptical, polygonal, or the like, within the scope of the present invention. In an alternate embodiment, the inner tube **124** may act as the front handle portion **116** for handling the working tool **102.** The diameter of the inner tube **124** is less than the diameter of the outer tube **126** to facilitate the insertion of the inner tube **124** into the outer tube **126.** The inner and outer tubes **124, 126** may be made of plastic or metal by injection molding or extrusion. In an embodiment, the inner and outer tubes **124, 126** are made of aluminium. In a locked configuration, the locking assembly **128** may lock the inner and outer tubes **124, 126** relative to each other. In an unlocked configuration, the locking assembly **128** may allow the inner tube **124** to telescopically slide within the outer tube **126.**

According to an embodiment of the present invention, the locking assembly **128** includes a lock grip element **131** and an adjustment nut **130** which is embodied as an annular collar disposed at an axial end of the outer tube **126.** The rotation of the adjustment nut **130** facilitates locking and unlocking operation. The lock grip element **131** includes an indicator to indicate rotational directions of the adjustment nut **130** for the locking and the unlocking operation. In an alternate embodiment (not shown), the locking assembly **128** may include a locking pin functioning with a set of holes provided on the tubes to perform locking or unlocking operation. In various alternative embodiments, the locking assembly **128** may include any arrangement which provides locking or unlocking between the inner tube and outer tube within the scope of the invention. It will be apparent to a person having ordinary skill in the art that the locking assembly **128** may embody various other type of locking assemblies like a clamping lever.

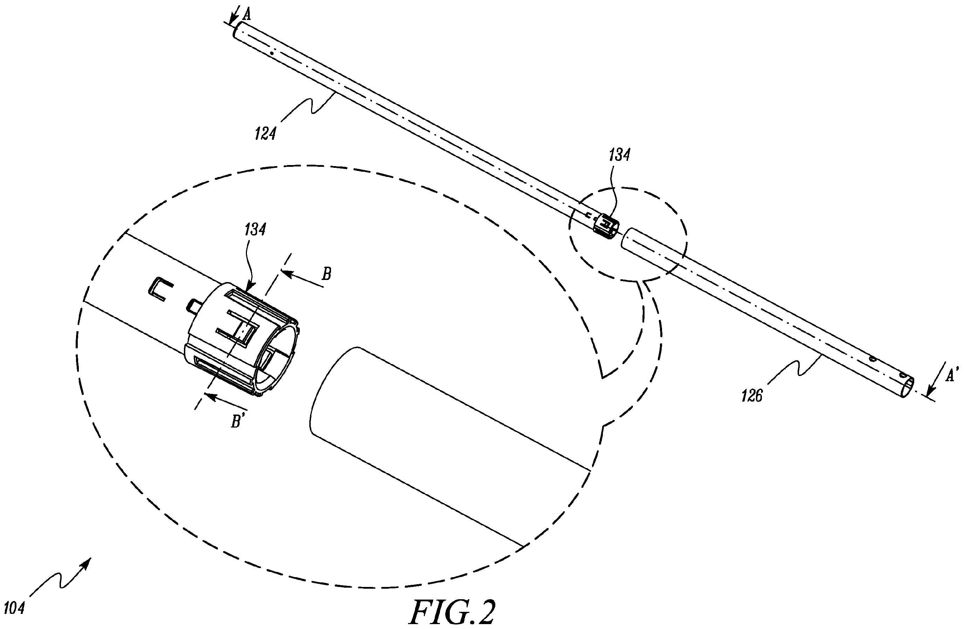

FIG. **2** illustrates an exploded view of the telescopic pole assembly **104** of the working tool assembly **100** of FIG. **1****,** in accordance to an embodiment of the present invention. As illustrated in detailed view, a guiding element **134** is connected to the inner tube **124** at a distal end thereof. The guiding element **134** may be connected to the inner tube **124** by means of fasteners, welding, or the like. The outer diameter of the guiding element **134** may be substantially equal to the inner diameter of the outer tube **126** to facilitate the sliding between the inner and outer tubes **124, 126.** In an alternate embodiment, the guiding element **134** may be connected to the outer tube **126.**

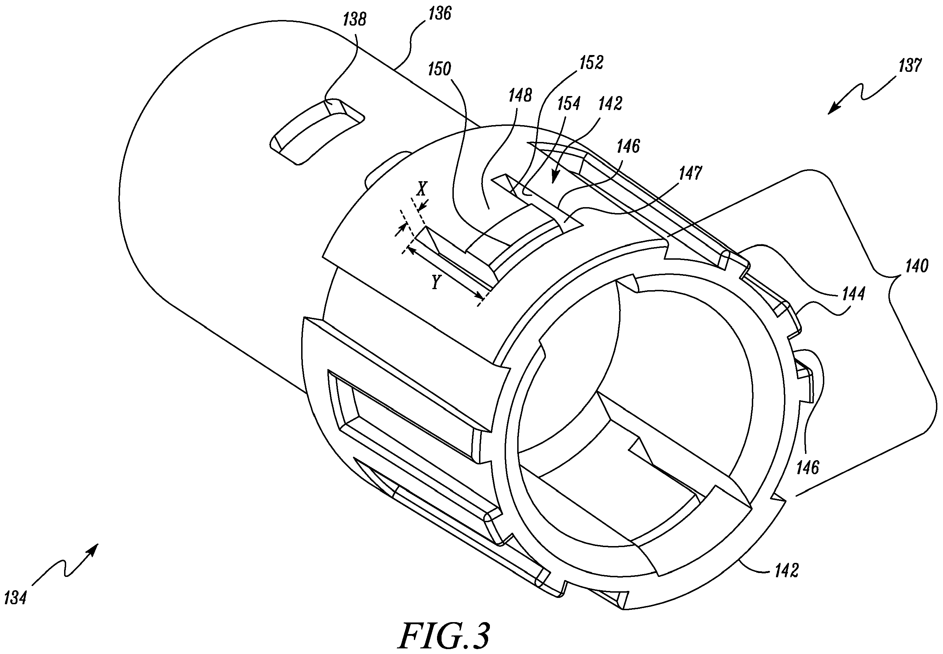

FIG. **3** illustrates the guiding element **134** of the telescopic pole assembly **104** of FIG. **2****,** in accordance to an embodiment of the present invention. The guiding element **134** includes a front part **137** and a rear part coupled to the inner tube **124.** The inner diameter of the inner tube **124** is substantially equal to the outer diameter of the rear part **136** of the guiding element **134** in order to facilitate the connection between the inner tube **124** and the guiding element **134.** The rear part **136** of the guiding element **134** may include at least one opening **138** for fasteners to fasten the inner tube **124** to the rear part **136** of the guiding element **134.** The rear part **136** of the guiding element **134** may also be connected to the inner tube **124** by welding. In another embodiment, the guiding element **134** may be integral to the inner tube **124.** In an embodiment, the front part **137** of the guiding element **134** includes at least one bushing part **140** and at least one braking part **142** disposed over the annular surface of the front part **137** of the guiding element **134.** In the illustrated embodiment, two bushing parts **140** and two braking parts **142** are disposed over the annular surface of the front part **137** of the guiding element **134.** The bushing part **140** includes a plurality of ribs **144** and slots **146** with a complimentary structure may be present on the mating of the inner surface of the outer tube **126** to facilitate guiding. The braking part **142** includes an opening **147** which has a braking element **148** integrally formed on a wall of the opening **147.** However, the braking element **148** may also be connected to the wall of the opening **147** by fastening or welding means. The arrangement of the braking element **148** enables a cantilever like design which is configured to be movable. The braking element **148** includes a braking surface **150** which is in frictional contact with the inner surface of the outer tube **126.** The braking element is placed in the opening **147** with a gap of a distance **X** between side walls **152** of the braking surface **150** and side walls **154** of the opening **147.** The length of the braking element **148** is less than a distance **Y** of the length of the slot **146.** The braking surface **150** may be made of a material having good frictional properties. A braking force between the inner and outer tubes **124, 126** will be dependent on the dimension of the braking surface **150.** Further, the braking force may also be dependent on the material of the braking surface **150.** The braking force may also be dependent on the length of the braking element with respect to the distance **Y** of the opening **147.** Further, the braking force may also be dependent on the distance **X** between the side walls **152, 154** of the braking element **148** and the opening **147.** In another embodiment, the braking element **148** may be a spring arrangement (not shown) and the spring itself providing frictional contact to the outer tube **126** after unlocking. In yet another embodiment, the braking element **148** may be a spring arrangement (not shown) and a braking portion may be connected to the end of the spring arrangement which will be in frictional contact with the outer tube **126.** The spring arrangement may include at least one helical spring.

When a user will open the adjustment nut **130** the inner tube **124** and the outer tube **126** will get unlocked thus enables the sliding motion between the inner tube **124** and the outer tube **126.** The bushing part **140** of the guiding element **134** will provide a sliding motion between the inner and outer tubes **124, 126,** due to the arrangement of ribs **144** and slots **146.** The braking surface **150** of the guiding element **134** will provide braking force between the inner and outer tubes **124, 126.** Thus, the guiding element **134** performs a dual function of guiding the sliding movement between the inner and outer tubes **124, 126** as well as the braking force between the inner and outer tubes **124, 126.** The braking force between the inner and outer tubes **124, 126** acts as a safety function since the working tool **102** may be a cutting tool like a hedge trimmer, pole saw, or the like. The braking force will provide a low sliding motion between the inner and outer tubes **124, 126.** The braking surface **150** will provide the braking force and due to the cantilever design the frictional contact with the inner surface of the outer tube **126** will always be constant over the lifetime of the telescopic pole assembly **104.** The cantilever design of the braking element **148** enables a movement and is flexible resulting in lower abrasion. The constant braking force applied between the inner and outer tubes **124, 126** will enable the user to control the insertion and extraction speed, based on the design of the braking element **148.**

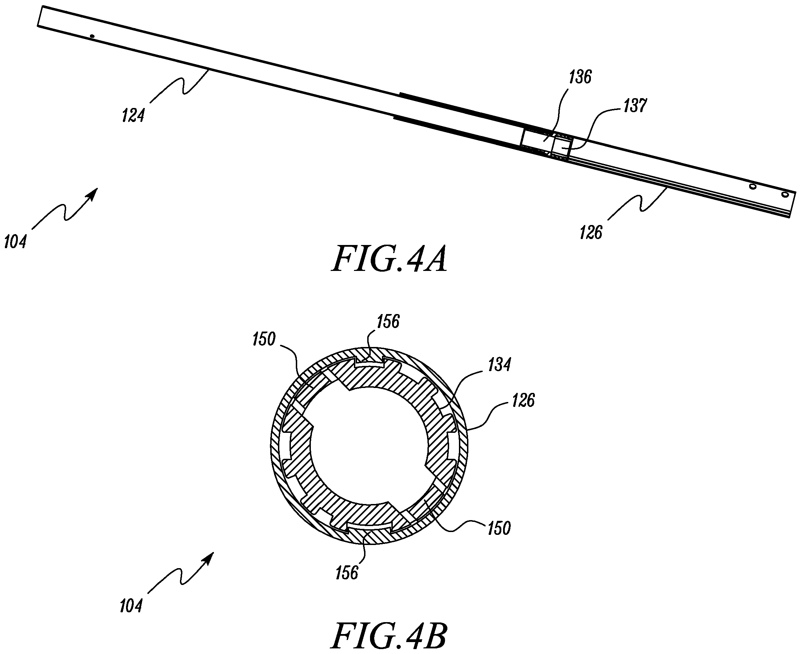

FIGS. **4A** and **4B** illustrate sectional views of the telescopic pole assembly and the guiding element, respectively, in accordance to an embodiment of the present invention. Fig. **4A** illustrates a sectional view of the telescopic pole assembly **104** about section **AA'** in Fig. **2****.** The front part **137** of the guiding element **134** is in frictional contact with the inner surface of the outer tube **126** and the rear part **136** of the guiding element **134** is fastened to the inner surface of the inner tube **124.** FIG. **4B** illustrates a sectional view of the telescopic pole assembly **104** about section **BB'** in Fig. **2****.** The inner side of the outer tube **126** includes complementary ribs **156** mating with the ribs **144** and slots **146** of the guiding element **134** to facilitate guiding over the length of the inner tube **124** with no rotational motion between the inner and outer tubes **124, 126.**

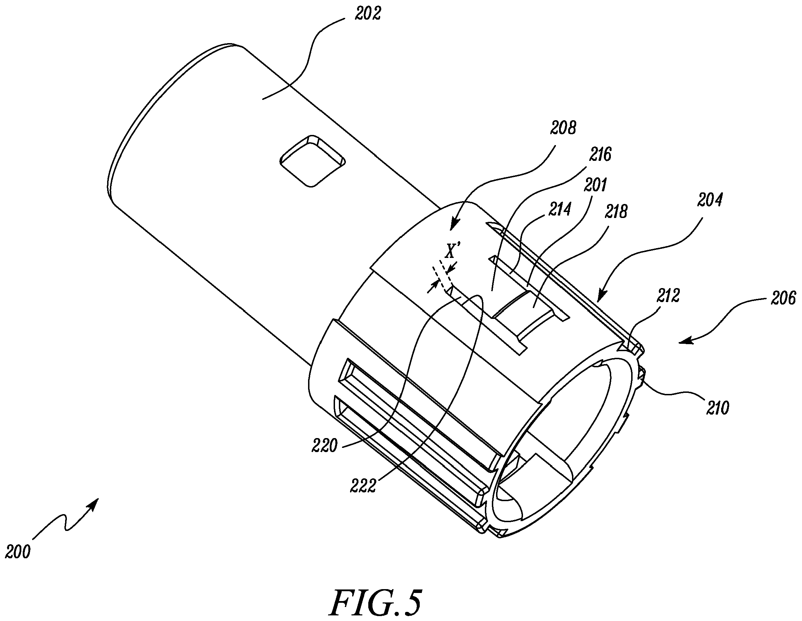

FIG. **5** illustrates a guiding element **200** of the telescopic pole assembly **104,** in accordance to another embodiment of the present invention. The guiding element **200** includes a front part **204** and a rear part **202** coupled to the inner tube **124.** The inner diameter of the inner tube **124** is substantially equal to the outer diameter of the rear part **202** of the guiding element **200** in order to facilitate the connection between the inner tube **124** and the guiding element **200.** The rear part **202** of the guiding element **200** may include at least one opening **201** for fasteners to fasten the inner tube **124** to the rear part **202** of the guiding element **200.** The rear part **202** of the guiding element **200** may also be connected to the inner tube **124** by welding. In another embodiment, the guiding element **200** may be integral to the inner tube **124.** The front part **204** of the guiding element **200** includes a bushing part **206** and a braking part **208.** In an embodiment, the front part **204** of the guiding element **200** includes at least one bushing part **206** and at least one braking part **208** disposed over the annular surface of the front part **204** of the guiding element **200.** In the illustrated embodiment, two bushing parts **206** and two braking parts **208** are disposed over the annular surface of the front part **137** of the guiding element **134.** The bushing part **206** includes a plurality of ribs **210** and slots **212** and a complimentary structure may be present on the mating of the inner surface of the outer tube **126** to facilitate guiding. The braking part **208** includes an opening **214** which has a braking element **216** integrated to both the ends of the opening **214.** In another embodiment, the braking element **216** may also be connected to both the ends of the opening **214** by fastening or welding means. The braking element **216** includes a braking surface **218** which is in friction contact with the inner surface of the outer tube **126.** The braking element is placed in the opening **214** with a gap of a distance **X'** between side walls **220** of the braking element **216** and side walls **222** of the opening **214.** The braking surface **218** may be made of a material having good frictional properties. The braking force between the inner and outer tubes **124, 126** will be dependent on the dimension of the braking surface **218.** Further, the braking force may also be dependent on the material of the braking surface **218.** The braking force may also be dependent on the positioning of the braking surface **218** over the length of the braking element **216.** Further, the braking speed may also be dependent on the distance **X'** between the side walls **220, 222** of the braking element **216** and the opening **214.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### PART LIST

- 100: working tool assembly
- 102: working tool
- 104: telescopic pole assembly
- 106: cutting head
- 108: blade arrangement
- 110: pivot joint
- 112: handle assembly
- 114: rear grip portion
- 116: front handle portion
- 118: cable
- 119: battery compartment
- 120: control switch
- 122a, 122b: switching buttons
- 124: inner tube
- 126: outer tube
- 128: locking assembly
- 130: adjustment nut
- 131: lock grip element
- 132: indicator
- 134: guiding element
- 136: rear part of the guiding element
- 137: front part of the guiding element
- 138: opening
- 140: bushing part
- 142: braking part
- 144: ribs
- 146: slots
- 147: opening
- 148: braking element
- 150: braking surface
- 152: side walls of the braking surface
- 154: side walls of the opening
- 156: complimentary ribs
- 200: guiding element
- 201: opening
- 202: rear part of the guiding element
- 204: front part of the guiding element
- 206: bushing part
- 208: braking part
- 210: ribs
- 212: slots
- 214: opening
- 216: braking element
- 218: braking surface
- 220: side walls of the braking element
- 222: side walls of the opening

## Claims

1. A telescopic pole assembly (**104**) for attachment to a working tool (**102**), wherein the telescopic pole assembly (**104**) comprises:
an inner tube (**124**);
an outer tube (**126**);
a locking assembly (**128**) configured to lock and unlock the inner tube (**124**) with respect to the outer tube (**126**);
and
a guiding element (**134**) connected to either one of the inner tube (**124**) or the outer tube (**126**), the guiding element (**134**) faciliting guiding over the length of the inner tube (**124**) with no rotational motion between the inner tube (**124**) and outer tube (**126**), **characterised in that**
the guiding element (134) comprises at least one bushing part (**140**) and at least one braking part (**142**); and
**in that** the at least one braking part (**142**) has a movable braking element (**148**) configured to provide a braking force between the inner tube (**124**) and the outer tube (**126**) when the inner tube (**124**) is unlocked with respect to the outer tube (**126**).

2. The telescopic pole assembly of claim 1, wherein the guiding element (**134**) is connected to the inner tube (**124**).

3. The telescopic pole assembly of claim 1, wherein the at least one bushing part (**140**) comprises a plurality of ribs (**144**) and slots (**146**) to facilitate guiding.

4. The telescopic pole assembly of claim 1, wherein either one of the inner tube (**124**) or the outer tube (**126**) comprises complementary ribs (**156**) configured to facilitate guiding with the guiding element (**134**).

5. The telescopic pole assembly of claim 1, wherein the at least one bushing part (**140**) and the at least one braking part (**142**) are integrally formed on the guiding element (**134**).

6. The telescopic pole assembly of claim 1, wherein the guiding element (**134**) is positioned at an end of either one of the inner tube (**124**) or the outer tube (**126**).

7. The telescopic pole assembly of claim 1, wherein the at least one braking part (**142**) is a spring arrangement.

8. The telescopic pole assembly of claim 1, wherein the spring arrangement includes at least one helical spring.

9. The telescopic pole assembly of claim 1, wherein the inner tube (**124**) and the outer tube (**126**) are made up of aluminium or steel.

10. The telescopic pole assembly of claim 1, wherein the inner tube (**124**) and outer tube (**126**) are made up of plastic.

11. The telescopic pole assembly of claim 1, wherein the locking assembly (**128**) includes an adjustment nut (**130**).

12. The telescopic pole assembly of claims 1 and 6, wherein the guiding element (**134**) is connected to either one of the inner tube (**124**) or the outer tube (**126**) by fasteners or welding

13. The telescopic pole assembly of claims 1 and 6, wherein the guiding element (**134**) is integral to either one of the inner tube (**124**) or the outer tube. (**126**).

14. The telescopic pole assembly of claim 1, wherein the working tool (**102**) is a cutting tool or a cleaning tool.

15. The telescopic pole assembly of claim 1, wherein the working tool (**102**) is a hedge trimmer.

## Patentansprüche

1. Ineinanderschiebbare Stangenanordnung (104) zur Befestigung an einem Arbeitswerkzeug (102), wobei die ineinanderschiebbare Stangenanordnung (104) umfasst:
ein inneres Rohr (124);
ein äußeres Rohr (126);
eine Verriegelungsanordnung (128), die dazu ausgestaltet ist, das innere Rohr (124) in Bezug auf das äußere Rohr (126) zu verriegeln und zu entriegeln;
und
ein Führungselement (134), das mit einem von dem inneren Rohr (124) oder dem äußeren Rohr (126) verbunden ist, wobei das Führungselement (134) die Führung über die Länge des inneren Rohrs (124) ohne Drehbewegung zwischen dem inneren Rohr (124) und dem äußeren Rohr (126) ermöglicht, **dadurch gekennzeichnet, dass**
das Führungselement (134) zumindest einen Laufbuchsenteil (140) und zumindest einen Bremsteil (142) umfasst; und
dass der zumindest eine Bremsteil (142) ein bewegliches Bremselement (148) aufweist, das dazu ausgestaltet ist, eine Bremskraft zwischen dem inneren Rohr (124) und dem äußeren Rohr (126) bereitzustellen, wenn das innere Rohr (124) in Bezug auf das äußere Rohr (126) entriegelt ist.

2. Ineinanderschiebbare Stangenanordnung nach Anspruch 1, wobei das Führungselement (134) mit dem inneren Rohr (124) verbunden ist.

3. Ineinanderschiebbare Stangenanordnung nach Anspruch 1, wobei der zumindest eine Laufbuchsenteil (140) eine Vielzahl von Rippen (144) und Schlitzen (146) aufweist, um die Führung zu ermöglichen.

4. Ineinanderschiebbare Stangenanordnung nach Anspruch 1, wobei eines von dem inneren Rohr (124) oder dem äußeren Rohr (126) komplementäre Rippen (156) umfasst, um die Führung mit dem Führungselement (134) zu ermöglichen.

5. Ineinanderschiebbare Stangenanordnung nach Anspruch 1, wobei der zumindest eine Laufbuchsenteil (140) und der zumindest eine Bremsteil (142) einteilig an dem Führungselement (134) ausgebildet sind.

6. Ineinanderschiebbare Stangenanordnung nach Anspruch 1, wobei das Führungselement (134) an einem Ende von einem von dem inneren Rohr (124) oder dem äußeren Rohr (126) positioniert ist.

7. Ineinanderschiebbare Stangenanordnung nach Anspruch 1, wobei der zumindest eine Bremsteil (142) eine Federanordnung ist.

8. Ineinanderschiebbare Stangenanordnung nach Anspruch 1, wobei die Federanordnung zumindest eine Schraubenfeder beinhaltet.

9. Ineinanderschiebbare Stangenanordnung nach Anspruch 1, wobei das innere Rohr (124) und das äußere Rohr (126) aus Aluminium oder Stahl bestehen.

10. Ineinanderschiebbare Stangenanordnung nach Anspruch 1, wobei das innere Rohr (124) und das äußere Rohr (126) aus Kunststoff bestehen.

11. Ineinanderschiebbare Stangenanordnung nach Anspruch 1, wobei die Verriegelungsanordnung (128) eine Einstellmutter (130) beinhaltet.

12. Ineinanderschiebbare Stangenanordnung nach den Ansprüchen 1 und 6, wobei das Führungselement (134) mit einem von dem inneren Rohr (124) oder dem äußeren Rohr (126) durch Befestigungselemente oder Verschweißen verbunden ist.

13. Ineinanderschiebbare Stangenanordnung nach den Ansprüchen 1 und 6, wobei das Führungselement (134) mit einem von dem inneren Rohr (124) oder dem äußeren Rohr (126) einteilig ausgebildet ist.

14. Ineinanderschiebbare Stangenanordnung nach Anspruch 1, wobei das Arbeitswerkzeug (102) ein Schneidwerkzeug oder ein Reinigungswerkzeug ist.

15. Ineinanderschiebbare Stangenanordnung nach Anspruch 1, wobei das Arbeitswerkzeug (102) ein Heckentrimmer ist.

## Revendications

1. Ensemble manche télescopique (104) pour être fixé à un outil de travail (102), dans lequel l'ensemble manche télescopique (104) comprend :
un tube interne (124) ;
un tube externe (126) ;
un ensemble de verrouillage (128) configuré pour verrouiller et déverrouiller le tube interne (124) par rapport au tube externe (126) ; et
un élément de guidage (134) relié à l'un du tube interne (124) et du tube externe (126), l'élément de guidage (134) facilitant le guidage sur la longueur du tube interne (124) sans mouvement de rotation entre le tube interne (124) et le tube externe (126), **caractérisé en ce que**
l'élément de guidage (134) comprend au moins une partie de douille (140) et au moins une partie de freinage (142) ; et
**en ce que** l'au moins une partie de freinage (142) a un élément de freinage mobile (148) configuré pour fournir une force de freinage entre le tube interne (124) et le tube externe (126) lorsque le tube interne (124) est déverrouillé par rapport au tube externe (126).

2. Ensemble manche télescopique de la revendication 1, dans lequel l'élément de guidage (134) est relié au tube interne (124).

3. Ensemble manche télescopique de la revendication 1, dans lequel l'au moins une partie de douille (140) comprend une pluralité de nervures (144) et de fentes (146) pour faciliter le guidage.

4. Ensemble manche télescopique de la revendication 1, dans lequel l'un du tube interne (124) et du tube externe (126) comprend des nervures complémentaires (156) configurées pour faciliter le guidage avec l'élément de guidage (134).

5. Ensemble manche télescopique de la revendication 1, dans lequel l'au moins une partie de douille (140) et l'au moins une partie de freinage (142) sont formées d'un seul tenant sur l'élément de guidage (134).

6. Ensemble manche télescopique de la revendication 1, dans lequel l'élément de guidage (134) est positionné au niveau d'une extrémité de l'un du tube interne (124) et du tube externe (126).

7. Ensemble manche télescopique de la revendication 1, dans lequel l'au moins une partie de freinage (142) est un agencement de ressort.

8. Ensemble manche télescopique de la revendication 1, dans lequel l'agencement de ressort comporte au moins un ressort hélicoïdal.

9. Ensemble manche télescopique de la revendication 1, dans lequel le tube interne (124) et le tube externe (126) sont constitués d'aluminium ou d'acier.

10. Ensemble manche télescopique de la revendication 1, dans lequel le tube interne (124) et le tube externe (126) sont constitués de matière plastique.

11. Ensemble manche télescopique de la revendication 1, dans lequel l'ensemble de verrouillage (128) comporte un écrou de réglage (130).

12. Ensemble manche télescopique des revendications 1 et 6, dans lequel l'élément de guidage (134) est relié à l'un du tube interne (124) et du tube externe (126) par des éléments de fixation ou par soudage.

13. Ensemble manche télescopique des revendications 1 et 6, dans lequel l'élément de guidage (134) est solidaire de l'un du tube interne (124) et du tube externe (126).

14. Ensemble manche télescopique de la revendication 1, dans lequel l'outil de travail (102) est un outil de coupe ou un outil de nettoyage.

15. Ensemble manche télescopique de la revendication 1, dans lequel l'outil de travail (102) est un taille-haie.
